Europäisches Patentamt

European Patent Office

Office européen des brevets

(11) Veröffentlichungsnummer: **0 451 884 A2**

# (12) EUROPÄISCHE PATENTANMELDUNG

(21) Anmeldenummer: 91200497.5

(22) Anmeldetag: 07.03.91

(51) Int. Cl.5: **F16C 17/02**, F16C 33/04

(30) Priorität: 04.04.90 DE 4010802

(43) Veröffentlichungstag der Anmeldung:
16.10.91 Patentblatt 91/42

(84) Benannte Vertragsstaaten:
**DE ES FR GB IT SE**

(71) Anmelder: **KOLBENSCHMIDT
Aktiengesellschaft
Karl-Schmidt-Strasse 8/12 Postfach 1351
W-7107 Neckarsulm(DE)**

(72) Erfinder: **Täffner, Hans
Wilhelmstrasse 43**
**W-7101 Neckarsulm(DE)**
Erfinder: **Köbele, Roland
Drosselweg 2**
**W-6921 Ittlingen(DE)**
Erfinder: **Kössler, Bernhard
Drosselweg 4**
**W-6837 St. Leon Rot 1(DE)**
Erfinder: **Iwansky, Joachim
Kronenstrasse 21**
**W-7522 Philippsburg 3(DE)**

(74) Vertreter: **Rieger, Harald, Dr.
Reuterweg 14**
**W-6000 Frankfurt am Main(DE)**

(54) **Gerollte Buchse für Gleitlager.**

(57) Bei einer gerollten Gleitlagerbuchse mit über die Lagerbreite gehender Stoßfuge ist an dem einen Stoß ein Zapfen und an dem anderen Stoß eine mit dem Zapfen kongruente Ausnehmung angebracht. Um einfache Schneidwerkzeuge zum verschnittlosen Ausstanzen des die Gleitlagerbuchse bildenden Bandabschnitts einsetzen zu können, besitzen Zapfen und Ausnehmung die Form eines gleichschenkligen Dreiecks.

Die Erfindung betrifft eine aus aus einem Ein- oder Mehrschicht-Werkstoff bestehenden Bandabschnitt gerollte Buchse für Gleitlager mit über die ganze Lagerbreite gehender, im eingepreßten Zustand geschlossener Stoßfuge, deren einer Stoß wenigstens einen Zapfen und deren anderer Stoß eine mit dem Zapfen kongruente, den Zapfen spielfrei aufnehmende Ausnehmung aufweist und deren an den Zapfen bzw. die Ausnehmung angrenzenden Abschnitte der Stöße parallel zur Buchsenachse verlaufend angebracht sind.

Eine gerollte Buchse für Gleitlager gemäß DIN 1494 ist aus einem Bandabschnitt (Platine) hergestellt und hat eine über die ganze Lagerbreite gehende Stoßfuge. Im freien Zustand kann eine gerollte Buchse unrund und ihre Stoßfuge offen sein. Nach dem Einpressen ist eine gerollte Buchse in der Regel rund und ihre Stoßfuge ist geschlossen. Die Stoßfuge wird vorzugsweise parallel zur Buchsenachse verlaufend angebracht. Um bei der Herstellung und dem Transport gerollter Buchsen für Gleitlager ein Verhaken der Buchsen untereinander im Bereich der offenen Stoßfuge zu vermeiden und um deren Einpressen in das Lagergehäuse zu vereinfachen, können gerollte Buchsen durch Verklinkung der Stoßfuge geschlossen sein. Für die Herstellung gerollter Buchsen mit Verklinkung der Stoßfuge befinden sich an der einen Stirnfläche am Stoß eine U-förmige Ausnehmung mit an ihren Übergängen zu den parallelachsigen Abschnitten der Stoßfuge angebrachten, senkrecht zur Buchsenachse verlaufenden Nasen und an der anderen Stirnfläche am Stoß ein mit einem Hals versehener gerundeter Vorsprung. Beim Rollen der Buchse für Gleitlager wird der Vorsprung in die U-förmige Ausnehmung eingeschoben und der Formschluß dadurch erreicht, daß die beiden am Rande der U-förmigen Ausnehmung angeordneten Nasen in die durch den Hals des verrundeten Vorsprungs gebildeten Hinterschneidungen verformt werden (GB-B-551 367). Abgesehen davon, daß das Umformen des Gleitlager-Werkstoffs im Bereich der Stoßfuge unerwünscht ist, entsteht beim Ausstanzen des Bandabschnitts infolge der komplizierten Gestaltung der Stirnflächen an den Stößen je nach Durchmesser und/oder Breite der gerollten Buchse ein Werkstoffverschnitt von bis zu 20 %.

Eine verschnittlose Herstellung gerollter Buchsen für Gleitlager ist möglich, wenn, wie in der DE-A-3 316 767 beschrieben, die Umrisse des Vorsprungs und der Ausnehmung identisch sind, der Vorsprung im wesentlichen die Form eines Rechtecks mit abgerundeten Ecken besitzt, die Länge des Halses dem 0,8- bis 1,4-fachen und die Länge der parallel zu den Längsstirnseiten des Bandabschnitts verlaufenden Seiten des Vorsprungs dem 0,6- bis 1,2-fachen der Dicke des Gleitlager-Werkstoffs entsprechen. Die Ausbildung der Schnittflächen des ausgeschnittenen Bandabschnitts zur Herstellung der vorstehend beschriebenen gerollten Buchse macht insbesondere hinsichtlich der Gestaltung der Stirnflächen an den Stößen ein Schneidwerkzeug hoher Genauigkeit erforderlich.

Es ist die Aufgabe vorliegender Erfindung, den Stirnflächen an den Stößen des Bandabschnitts zur Herstellung der eingangs beschriebenen gerollten Buchse für Gleitlager eine solche Endform zu geben, daß diese mit vergleichsweise einfacheren Schneidwerkzeugen aus dem Gleitlager-Werkstoff ausschneidbar und eine verschnittlose Ausnutzung des Gleitlager-Werkstoffs gewährleistet ist.

Die Lösung dieser Aufgabe besteht in einem Bandabschnitt, bei dem die an den Stirnflächen an den Stößen angebrachten Zapfen bzw. Ausnehmung die Form eines gleichschenkligen Dreiecks besitzen, wobei nach einem vorzugsweisen Merkmal der Erfindung die Schenkel des Dreiecks mit der senkrecht zur Buchsenachse liegenden Winkelhalbierenden jeweils einen Winkel von 20 bis 60° bilden.

Durch die erfindungsgemäß gestaltete Form der an den Stirnflächen der Stöße des Bandabschnitts angebrachten Zapfen und Ausnehmung kann der Bandabschnitt entlang einer vergleichsweise einfach gestalteten Schneidlinie vom Band verlustlos abgeschnitten werden. Beim Einsetzen der aus dem Bandabschnitt gerollten Buchse für Gleitlager in ein Lagergehäuse entsteht eine formschlüssige Verbindung an den Stirnflächen der beiden Stöße.

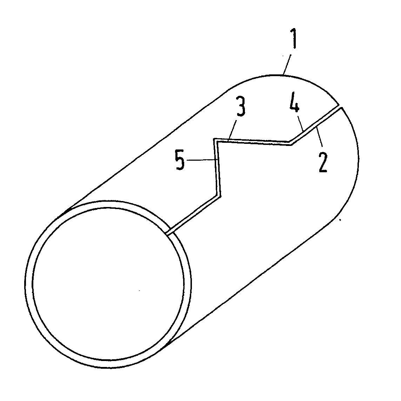

Die Erfindung ist in der Zeichnung, die eine perspektivische Darstellung einer aus einem Bandabschnitt gerollten Buchse für Gleitlager wiedergibt, dargestellt und wird nachfolgend näher und beispielhaft erläutert.

Der von einem Band aus Mehrschicht-Werkstoff, aufgebaut aus einer Stahlstützschicht mit einer 0,30 mm dicken porösen Bronzeschicht und einer darauf befindlichen Gleitschicht aus PTFE mit 20 % Bleipulver, abgetrennte und zu einer Buchse (1) gerollte Bandabschnitt weist an dem einen Stoß (2) einen dreieckförmigen Zapfen (3) und an dem anderen Stoß (4) eine mit dem Zapfen (3) kongruente Ausnehmung (5) auf. Beim Rollen des Bandabschnitts zur Buchse (1) ist der Zapfen (3) so in die Ausnehmung (5) eingeführt, daß beim Einsetzen der gerollten Buchse (1) in ein Lagergehäuse eine formschlüssige Verbindung zwischen den Stößen (2,4) entsteht.

**Patentansprüche**

1. Aus aus einem Ein- oder Mehrschicht-Werkstoff bestehenden Bandabschnitt gerollte Buchse für Gleitlager mit über die ganze Lagerbreite gehender, im eingepreßten Zustand geschlossener Stoßfuge, deren einer Stoß wenigstens einen Zapfen und deren anderer Stoß eine mit dem Zapfen kongruente, den Zapfen spielfrei aufnehmende Ausnehmung aufweist und deren an den Zapfen bzw. die Ausnehmung angrenzenden Abschnitte der Stöße parallel zur Buchsenachse verlaufend angebracht sind, dadurch gekennzeichnet, daß der Zapfen (3) bzw. die Ausnehmung (5) die Form eines gleichschenkligen Dreiecks besitzen.

2. Buchse nach Anspruch 1, dadurch gekennzeichnet, daß die senkrecht zur Buchsenachse liegende Winkelhalbierende des dreieckförmigen Zapfens (3) jeweils einen Winkel von 20 bis 60° mit den Schenkeln des Dreiecks bildet.